# EUROPEAN PATENT APPLICATION

(11) **EP 0 968 942 A1**
(43) Date of publication of application: **05.01.2000**
(21) Application number: 99201918.2
(22) Date of filing: 15.06.1999
(51) Int. Cl.: B65G 65/23

(54) **Device and method for emptying a container with contents such as fruit**

(30) Priority: 15.06.1998 NL 1009406
(71) Applicant: De Greef's Wagen- Carrosserie- en Machinebouw B.V., NL-4196 AM Tricht (NL)
(72) Inventor: Melsen, Ludovicus, 4641 RA Ossendrecht (NL)
(74) Representative: Land, Addick Adrianus Gosling

(57) **Abstract**

The present invention relates to a device and method for emptying a relatively large and heavy container with contents such as fruit, comprising:
- a frame (14) on which the container can be placed;
- tilting means for tilting the frame; and
- vibrating means (24) arranged on the frame (14) or on another component of the device for setting the container with contents into vibration during the emptying.

## Description

In current practice fruit such as apples, pears, peppers, tomatoes and the like are often stored and transported in relatively large and heavy crates which, because of the weight, must be emptied by machine.

Particularly if fruits have been stored for some time in cold stores, quality loss may occur due to the vulnerability of such fruit during mechanical emptying since fruit drops downward over a considerable height and rolls over other fruit.

The present invention provides a device for emptying a relatively large and heavy container with contents such as fruit, for instance apples and pears, comprising:
- a frame on which the container can be placed;
- tilting means for tilting the frame; and
- vibrating means arranged on the frame or on another component of the device for setting the container with contents into vibration during the emptying.

It has been found from practical tests that, by setting into vibration the frame on which the crate rests, the angle of inclination at which the fruit is situated in the tilted position of the crate remains smaller, thus preventing fruit situated high in the crate from rolling downward in one movement. Particularly in the case of apples and pears, but also with other fruits, it has been found that much less damage thereto occurs, inter alia because a better closed flow of fruit leaves the container, whereby less damage occurs, while the speed of emptying is increased due to the even flow.

In a first preferred embodiment the vibrating means are situated on a frame part on which the crate rests in tilted position and which frame part is moved slowly upward during emptying.

In a further preferred embodiment the vibrating means are situated close to the discharge opening on a fixedly disposed plate. The desired vibration effect can hereby be realized with (even) less power.

A valve member is preferably arranged hingedly on the frame, which valve member closes the container during tilting in that the valve member connects onto a (co-displacing) sheet or cloth which closes off the remaining part of the crate. As soon as the crate is moved upward, the valve member is released and slows down the first fruits as they leave the crate.

It has further been found advantageous to arrange a flap of flexible material at an upper edge of the crate in the tilted position of the frame in order to slow down the fruit at the start of emptying of the crate, particularly if large crates, for instance slightly larger than the dimensions of the frame, have to be emptied.

The present invention further provides a method wherein the vibrating means are preferably switched off towards the end of the emptying process so as not to cause unnecessary bumping of the fruit against the crate.

Further advantages, features and details of the present invention will be elucidated in the light of the following description of preferred embodiments thereof with reference to the annexed drawings, in which:
fig. 1 shows a partly broken-away view in perspective of a first preferred embodiment of a device according to the present invention;
fig. 2 shows a partly broken-away view in perspective of a second preferred embodiment of a device according to the present invention;
fig. 3 is a partly broken-away view in perspective of detail III of fig. 2 of a preferred embodiment of the device according to the present invention in a first position; and
fig. 4 is a partly broken-away view in perspective of detail III of fig. 2 of a preferred embodiment of the device according to the present invention in a second position.

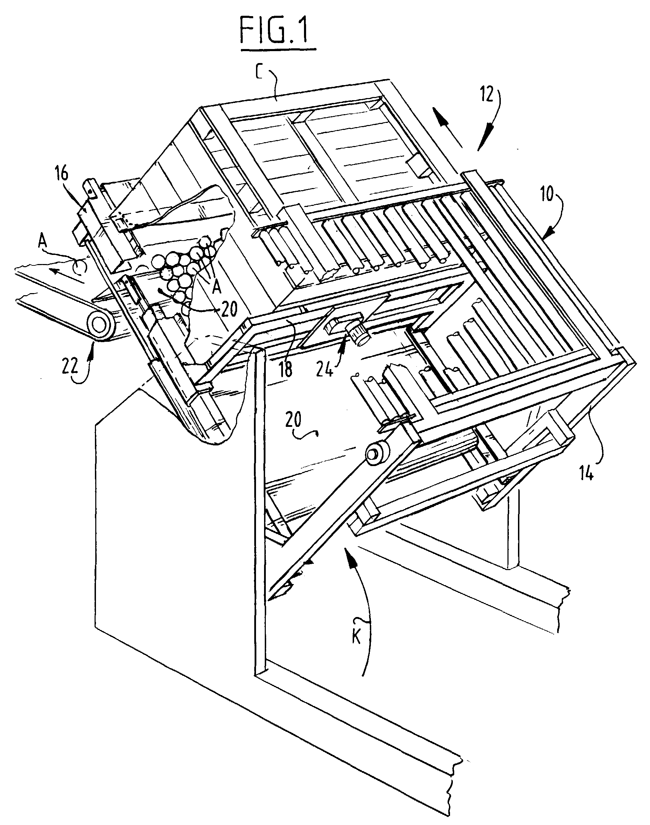

A crate C (fig. 1) filled with fruit A is placed in a manner not shown on a roller conveyor 10 of a device 12 according to the present invention using for instance a fork-lift truck. Roller conveyor 10 is arranged in a frame 14 which is tiltable in the direction of the arrow K into the position shown in fig. 1, wherein crate C is held fast at the sides by flanges on frame parts 16, while it is supported on the underside by a frame part 18. In the position shown in fig. 1 fruit A rolls out of crate C since, by displacing frame part 18, the crate is moved upward relative to an endless cloth 20 which still supports the fruit A in the tilted position without damage being caused thereto. The fruit is discharged along cloth 20 to an outfeed conveyor 22.

A vibrating motor 24 is arranged on frame part 18 for setting crate C into slight vibration via this frame part, whereby fruit A rolls evenly out of the crate and, as crate C moves upward, the fruit close to the bottom of crate C is prevented from coming to lie at too great an angle of inclination and from thereby falling at too great a speed onto the outfeed conveyor.

The vibration can also be brought about by an electric motor driving one or more eccentric elements.

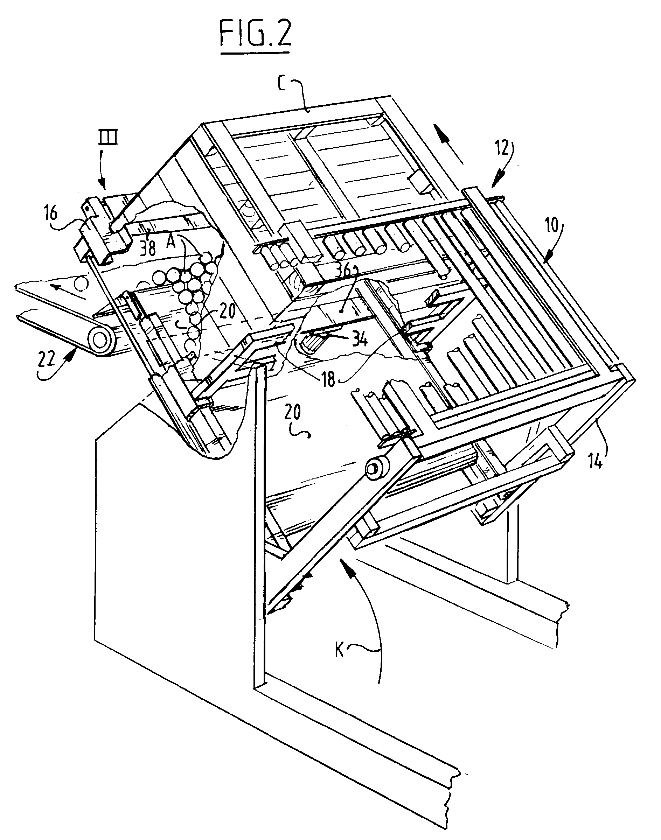

In a second embodiment (fig. 2), wherein the same components are designated as far as possible with the same reference numerals, a vibrating motor 34 is arranged on a transverse plate 36 extending between frame parts 16 under endless cloth 20, close to the discharge opening for the fruit.

Close to the upper ends of frame parts 16, only one end of which is shown in fig. 2, is arranged a flap 38 which at the start of emptying of the crate, i.e. during the first upward movement, prevents the fruit falling onto outfeed conveyor 22 at too great a speed. This is particularly advantageous at the start of emptying of crates with slightly larger dimensions than the frame, i.e. in the tilted position the upper edge extends beyond the outer ends of frame parts 16.

The vibrating means are preferably switched off as soon as the crate has almost reached its highest position in order to prevent the fruit suffering damage through contact with the underside of the crate in the tilted situation.

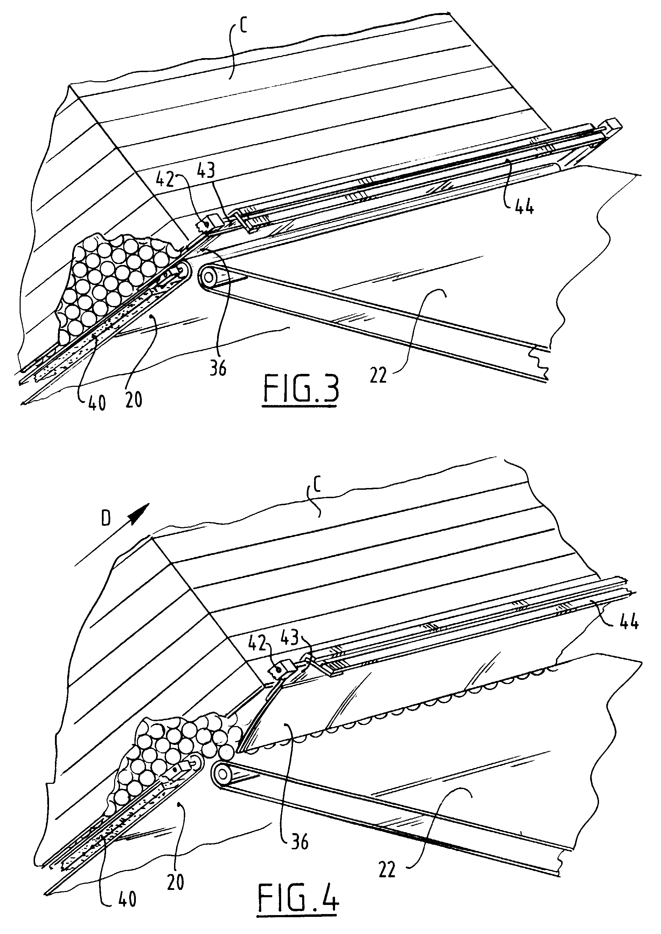

As shown particularly in fig. 3, the flap 36 of flexible material connects in the highest position of tilted container C onto the endless cloth 20 which is preferably provided with a layer of foam plastic 40 so as to form a cushion for preventing damage to the fruit during tilting.

As the crate is moved upward as according to arrow D (fig. 4), flap 36, which is fastened to a metal plate 43, moves clear of cloth 20 and this flap 36 slows down the first flow of fruit, for which purpose plate 43 is arranged hingedly, while a steel beam 44 is arranged on the side opposite hinge 42 to serve as counterweight and to force back plate 43 slightly counter to the flow of fruit. As container C is moved further upward in the direction of arrow D, flap 36 is pushed back by counterweight 44.

The present invention is not limited to the above described preferred embodiments thereof; the rights sought are defined by the following claims, within the scope of which many modifications can be envisaged.

## Claims

1. Device for emptying a relatively large and heavy container with contents such as fruit, for instance apples and pears, comprising:
- a frame on which the container can be placed;
- tilting means for tilting the frame; and
- vibrating means arranged on the frame or on another component of the device for setting the container with contents into vibration during the emptying.

2. Device as claimed in claim 1, wherein the vibrating means comprise a vibrating motor.

3. Device as claimed in claim 1, wherein the vibrating motor comprises an electric motor and one or more eccentric elements driven by the electric motor.

4. Device as claimed in claim 1, 2 or 3, wherein the vibrating means are arranged on a movable frame part on which the crate rests in tilted position.

5. Device as claimed in claim 1, 2 or 3, wherein the vibrating means are arranged on a transverse plate close to the emptying opening of the crate.

6. Device as claimed in any of the claims 1-5, provided with lifting means for raising the crate gradually along the discharge opening.

7. Device as claimed in any of the claims 1-6, provided with a sheet of flexible material which extends close to an upper edge of the crate in the tilted position of the frame and which serves to slow down the fruit slightly at the start of emptying.

8. Method wherein a device as claimed in one or more of the claims 1-7 is applied.

9. Method as claimed in claim 8, wherein the vibrating means are switched off during emptying of the final contents from the crate.

10. Device for emptying a relatively large and heavy container with contents such as fruit, comprising:
- a frame on which the container can be placed;
- tilting means for tilting the frame; and
- a valve member for closing respectively opening the upper part of the container in tilted position.

11. Device as claimed in claim 10, wherein the valve member is arranged hingedly on a frame part.

12. Device as claimed in claim 11, wherein a counterweight is arranged opposite the hinged valve member for placing/holding the valve member in closed position during tilting/moving upward of the container.

13. Device as claimed in claim 1, provided with a valve member as claimed in any of the claims 10, 11 or 12.
